# EUROPEAN PATENT APPLICATION

(11) **EP 2 907 627 A2**
(43) Date of publication of application: **19.08.2015**
(21) Application number: 15151919.6
(22) Date of filing: 21.01.2015
(51) Int. Cl.: B25J 9/16, G05B 19/4093

(54) **Processing device, robot, robot system, and processing method**

(30) Priority: 23.01.2014 JP 2014010148
(71) Applicant: Seiko Epson Corporation, Tokyo 163 (JP)
(72) Inventor: Nagashima, Yoshiki, Nagano, 392-8502 (JP)
(74) Representative: Hoffmann Eitle

(57) **Abstract**

A processing device includes a processing section (120) configured to cause the processing device to display an editing screen for editing work to be performed by a robot. The work includes first work and second work. When a work object or work content in the first work is selected on the editing screen, the processing section (120) causes the processing device to display candidates of a work target of the second work on the editing screen.

## Description

### BACKGROUND

### 1. Technical Field

The present invention relates to a processing device, a robot, a robot system, a processing method, and the like.

### 2. Related Art

A method of generating a program (a teaching program), which describes contents of work, in order to cause a robot to perform desired work is widely known. When the program is generated, if a user is caused to perform coding of a work program using a specific programming language, a burden on the user is large because the user is required to have expert knowledge concerning the programming language, the robot, and the like.

To reduce the burden on the user, a method of facilitating or automating creation of a work program is proposed. For example, JP-A-2006-31311 (Patent Literature 1) discloses a method of storing a plurality of teaching programs and invoking, as a subprogram, a teaching program related to a work object from the plurality of teaching programs to generate a main program.

In the method disclosed in Patent Literature 1, product numbers of work objects and application order are added to and stored in the teaching programs as attribute information. Therefore, when the user attempts to create a main program concerning a predetermined work object, a teaching program selected as a subprogram is substantially fixed. As a result, the intention of the user is hardly reflected on the main program. Versatility and reusability of the teaching programs are low.

### SUMMARY

An aspect of the invention relates to a processing device including a processing section configured to cause the processing device to display an editing screen for editing work to be performed by a robot. The work includes first work and second work. When a work object or work content in the first work is selected on the editing screen, the processing section causes the processing device to display candidates of a work target of the second work on the editing screen.

In the aspect of the invention, when the work object or the work content in the first work is selected, the processing section causes the processing device to display candidates of the work target of the second work. Therefore, it is possible to, for example, select, according to specific content of the first work, candidates of the work object of the second target to be displayed. It is possible to, for example, facilitate teaching of a robot operation by the user.

In the aspect of the invention, the processing device may further include a storing section configured to classify, when the work includes first work to N-th (N is an integer equal to or larger than 2) work to be executed in time series, each subprogram of a plurality of subprograms into any one kind of work of the first work to the N-th work and store the subprogram. When the subprogram of i-th (i is an integer satisfying 1≤i≤N-1) work among the first work to the N-th work is selected as an execution subprogram, which is the subprogram serving as an execution target, from the plurality of subprograms, the processing section may cause the processing device to display the editing screen on which candidates of the execution subprogram included in i+1-th work are displayed.

With this configuration, an appropriate subprogram among the plurality of subprograms can be set as a display target by using the first work to the N-th work. Therefore, it is possible to, for example, facilitate selection of the execution subprogram by the user and generate an appropriate work scenario.

In the aspect of the invention, the storing section may store, as each subprogram of the plurality of subprograms, information in which input state information representing a state of the robot before processing execution and output state information representing the state of the robot after the processing execution are associated with each other.

With this configuration, it is possible to store, as the subprogram, information in which the input state information and the output state information are associated with each other.

In the aspect of the invention, when the subprogram of the i-th work is selected from the plurality of subprograms as the execution subprogram, the processing section may cause the processing device to display, on the editing screen, as a candidate of the execution subprogram, among the plurality of subprograms, the subprogram classified into a category of the i+1-th work, the input state information of the subprogram matching the output state information of the subprogram in the i-th work category selected as the execution subprogram.

With this configuration, it is possible to, for example, limit the subprogram to be a display target using not only the work category but also the input state information and the output state information.

In the aspect of the invention, the storing section may store information concerning a plurality of work objects as work object information and store, as each subprogram of the plurality of subprograms, information associated with selectable workpiece object information for specifying a selectable workpiece object, which is a work object selectable as a work target among the plurality of work objects.

With this configuration, it is possible to, for example, store the work object information and store, as the subprogram, the information associated with the selectable workpiece object information.

In the aspect of the invention, when the work object by the robot is determined, the processing section may cause, on the basis of the selectable workpiece object information, among the plurality of subprograms, the processing device to display, as a candidate of the execution subprogram, the subprogram in which it is determined that the determined work object is the selectable workpiece object on the editing screen.

With this configuration, it is possible to, for example, limit the subprogram to be the display target using not only a work category but also work target work piece and selectable workpiece information.

In the aspect of the invention, when a singularity of the execution subprogram is selected from the first work to the N-th work, whereby N pieces of the execution subprograms are selected, the processing section may cause the processing device to display, as the editing screen, a screen for displaying, as a list, the N execution programs to be executed in time series.

With this configuration, it is possible to clearly present teaching content of the robot operation by the user to the user on the editing screen.

In the aspect of the invention, when the work by the robot is configured from a first work block to an M-th (M is an integer equal to or larger than 2) work block, one block of which is a set of the first work to the N-th work, when a singularity of the execution subprogram is selected from each kind of work of the first work to the N-th work, whereby N pieces of the execution subprograms are selected with respect to each work block of the first work block to the M-th work block and MxN pieces of the execution subprograms are selected with respect to the work by the robot, the processing section may cause the processing device to display, as the editing screen, a screen for displaying, as a list, the MxN pieces of execution subprograms to be executed in time series.

With this configuration, it is possible to, for example, clearly present the teaching content of the robot operation by the user to the user on the editing screen.

In the aspect of the invention, the processing section may divide, on the basis of a work object of the robot, the work into the first work block to the M-th work block set in units of the work object and cause, concerning each work block of the first work block to the M-th work block, the processing device to display the editing screen used for selection of the execution subprogram concerning each kind of work of the first work to the N-th work.

With this configuration, it is possible to, for example, set a work block on the basis of a work object set as a target of work of the robot.

In the aspect of the invention, the first work to the N-th work may be material supplying work for performing supply of the work object, positioning work for determining a work position, processing work for performing processing for the work object, and material removing work for performing removal of the work object after the processing.

With this configuration, it is possible to use, specifically, four kinds of work, i.e., "material supply", "positioning", "processing", and "material removal" as the first work to the N-th work.

Another aspect of the invention relates to a robot including a processing section configured to cause the robot to display an editing screen for editing work to be performed by the robot. The work includes first work and second work. When a work object or work content in the first work is selected on the editing screen, the processing section causes the robot to display candidates of a work target of the second work on the editing screen.

In the another aspect of the invention, when the work object or the work content in the first work is selected, the processing section causes the robot to display candidates of the work object of the second target. Therefore, it is possible to, for example, select, according to specific content of the first work, candidates of the work target of the second work to be displayed. It is possible to, for example, facilitate teaching of a robot operation by the user. Further, it is possible to realize the robot that performs operation on the basis of a created work scenario.

Still another aspect of the invention relates to a robot system including: a robot; and a display section configured to display an editing screen for editing work to be performed by the robot. The work includes first work and second work. The display section displays candidates of a work target of the second work on the editing screen when a work object or work content in the first work is selected on the editing screen.

In the still another aspect of the invention, when the work object or the work content in the first work is selected, the display section displays candidates of the work target of the second work. Therefore, it is possible to, for example, select, according to specific content of the first work, candidates of the work target of the second work to be displayed. It is possible to, for example, facilitate teaching of a robot operation by the user.

Yet another aspect of the invention relates to a processing method including: displaying an editing screen for editing first work to be performed by a robot; and displaying, when a work object or work content in the first work is selected on the editing screen, candidates of a work target of second work to be performed by the robot on the editing screen.

In the yet another aspect of the invention, when the work object or the work content in the first work is selected, candidates of the work target of the second work are displayed. Therefore, it is possible to, for example, select, according to specific content of the first work, candidates of the work target of the second work to be displayed. It is possible to, for example, facilitate teaching of a robot operation by the user.

According to the several aspects of the invention, it is possible to provide the processing device, the robot, the robot system, the processing method, and the like for performing display processing of an editing screen including candidates of a work target to perform teaching in a form easy for the user to understand and reflect an intention of the user.

### BRIEF DESCRIPTION OF THE DRAWINGS

The invention will be described with reference to the accompanying drawings, wherein like numbers reference like elements.
Fig. 1 is a configuration example of a processing device according to an embodiment.
Fig. 2 is a configuration example of a robot according to the embodiment.
Fig. 3 is another configuration example of the robot according to the embodiment.
Fig. 4 is a schematic diagram showing processing in the embodiment.
Figs. 5A to 5C are structure examples of data used in the embodiment.
Fig. 6 is an example of work contents by work categories.
Fig. 7 is an example of operation content information included in a subprogram.
Fig. 8 is a flowchart for explaining processing in the embodiment.
Fig. 9 is an example of an editing screen.
Fig. 10 is an example of a workpiece search screen included in the editing screen.
Fig. 11 is an example of an extraction result screen for an execution subprogram included in the editing screen.
Figs. 12A to 12D are examples of an editing screen for displaying a creation result of a work scenario.
Figs. 13A and 13B are examples of matching determination of contexts.
Fig. 14 is a schematic diagram showing robot work in the case of one work target workpiece.
Fig. 15 is a schematic diagram showing robot work in the case of two work target workpieces.
Fig. 16 is another flowchart for explaining the processing in the embodiment.
Fig. 17 is an example of a work target workpiece selection screen included in the editing screen.
Fig. 18 is another example of the editing screen for displaying a creation result of a work scenario.
Fig. 19 is a schematic diagram showing more complicated robot work.
Fig. 20 is another example of the editing screen for displaying a creation result of a work scenario.

### DESCRIPTION OF EXEMPLARY EMBODIMENTS

An embodiment is explained below. Note that the embodiment explained below does not unduly limit contents of the invention described in the appended claims. Not all of components explained in the embodiment are essential constituent elements of the invention.

### 1. Method in this embodiment

First, a method in this embodiment is explained. As explained above, a method of performing creation of a work scenario (or a work program) in a form easy for a user to understand is proposed. However, in a method in which a main program to be created tends to be inflexible as in Patent Literature 1, an intension and a request of the user are hardly reflected on the main program. Versatility and reusability of a teaching program (a subprogram) are low. It is difficult to use a predetermined teaching program in a plurality of work objects or a plurality of kinds of robot work. Therefore, it is likely that diversity and flexibility of the main program to be created are spoiled. It is also likely that, even when the same work is performed, it is necessary to prepare different teaching programs.

In that regard, if a sufficient number of kinds of subprograms are prepared as a library and the user is caused to select a desired subprogram, it is possible to reflect an intention of the user on a work scenario to be created.

However, even if a subprogram group having high versatility compared with Patent Literature 1 and the like is prepared, it is necessary to store a large amount of subprograms in order to enable creation of a variety of work scenarios.

For example, in simple work for connecting two workpieces, as a method of connecting, screwing is used in some case and snap-fit is used in other cases. Further, concerning the screwing, various methods are conceivable according to, for example, what kind of screws are used, which tool is used to turn the screws, whether a jig is used in the screwing. When abstraction levels of subprograms are set high, a processing load of a generation processing for a program with a low abstraction level enough for actually controlling a robot increases. Therefore, it is inappropriate to excessively increase the abstraction level. Specifically, it is realistic to prepare a plurality of subprograms concerning "screw" as well such as "screw a screw A using a tool B" and "position a screw C with a jig E and screw the screw C using a tool D" rather than preparing only one subprogram "screw".

In view of the above, in adopting a method of causing the user to select a desired subprogram, a burden on the user is large if all stored subprograms are presented to the user. In particular, in manual selection of a subprogram by the user, a total number of subprograms could be a significant problem compared with the method of automatically selecting a subprogram as in Patent Literature 1.

Further, when all the subprograms are presented, a work scenario to be created could be inappropriate. A predetermined subprogram could have a specific operation condition, for example, the subprogram operates on the premise that a predetermined workpiece is positioned in a predetermined position. In that case, the predetermined workpiece is arranged in a position other than the predetermined position. Alternatively, in the first place, when the predetermined subprogram is executed in a state in which the predetermined workpiece is not supplied to a work space of the robot, the predetermined subprogram is invoked although the predetermined subprogram does not satisfy the operation condition. That is, when all the subprograms are presented, appropriateness of a work scenario to be created cannot be guaranteed.

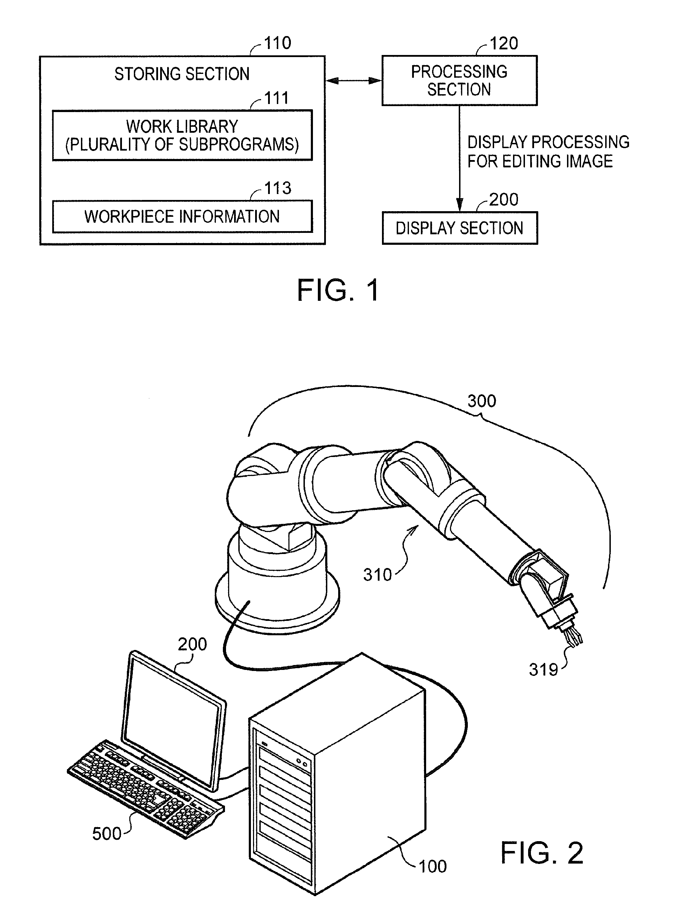

Therefore, the applicant proposes a method that can reflect an intention of the user on a work scenario to be created, reduce a burden on the user, and enable creation of a work scenario with high appropriateness. Specifically, a processing device in this embodiment includes, as shown in Fig. 1, a processing section 120 that causes the processing device to display an editing screen for editing work to be performed by a robot. The work includes first work and second work. When a work object or work content in first work is selected on the editing screen, the processing section 120 causes the processing device to display candidates of a work target of second work on the editing screen. Note that the editing screen is displayed on a display section 200. However, the display section 200 may be included in the processing device according to this embodiment or may be provided in another device.

When entire work of the robot is divided into several processes, first work and second work represent small work serving as a unit of the processes after the division. For example, when the entire work is configured from only the first work and the second work, first, the first work is performed and thereafter the second work is performed to execute the entire work. However, kinds of work included in the work are not limited to only the first work and the second work. Three or more kinds of work may be included.

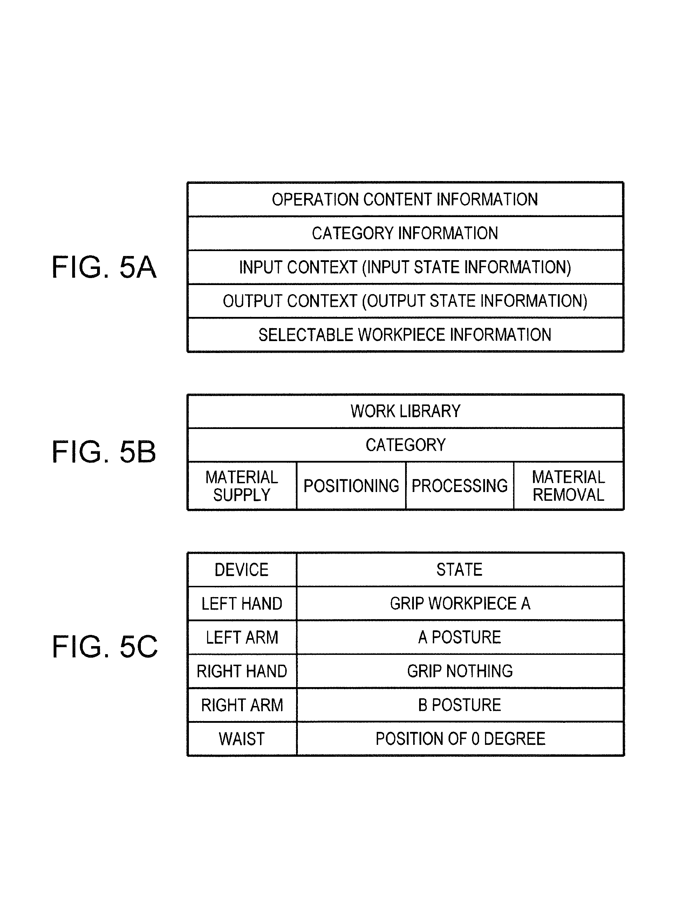

As explained below with reference to Fig. 5B and the like, the first work and the second work may correspond to work categories when typical kinds of work of the robot are categorized. In that case, it is also conceivable to execute the first work and the second work a plurality of times in the work of the robot. For example, when the first work is work for supplying a work object (a workpiece) and the second work is work for arranging the work object, a given workpiece can be arranged in a predetermined position if each of the first work and the second work is performed once. In this case, if robot work is work for "arranging three workpieces respectively in predetermined positions", the first work and the second work are performed for a first workpiece, the first work and the second work are performed for a second workpiece, and the first work and the second work are performed for a third work to complete the entire work.

The work object is a workpiece serving as a target of processing (processing such as connecting or bending). In the following explanation, the work object is explained as a workpiece. However, the work object may include a tool and the like used in the processing.

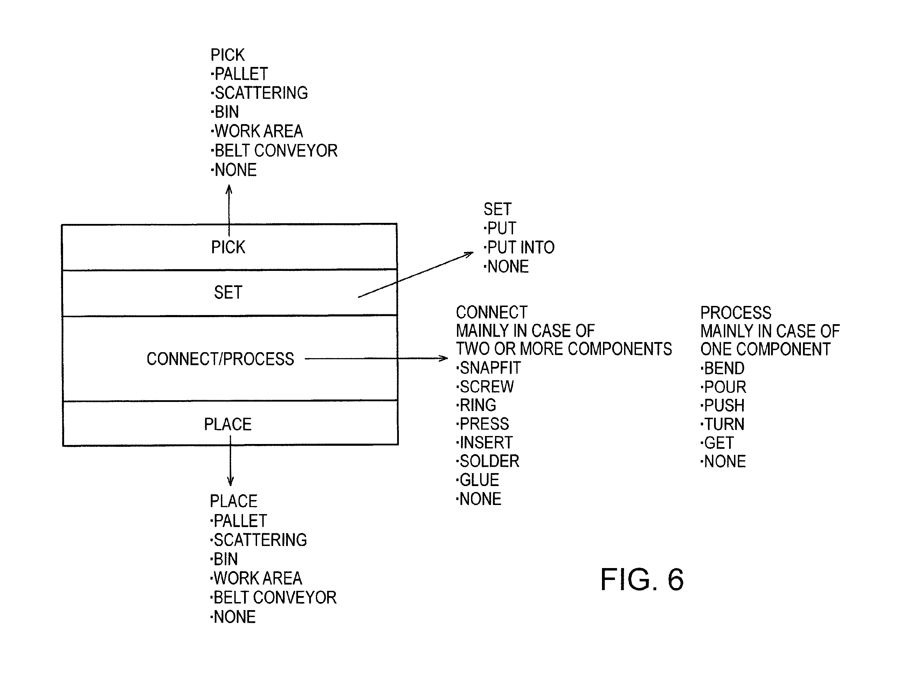

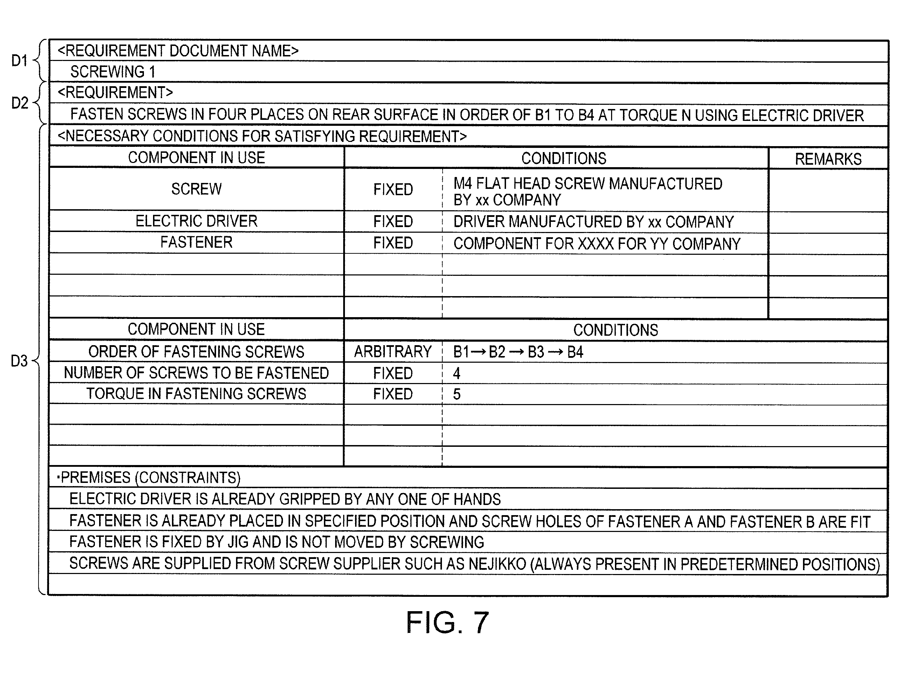

The work content is content that specifically specifies, to a degree executable by the robot, work performed in the first work and the second work. As explained below with reference to Fig. 6, even when the first work is material supply (pick), as a method of the material supply, various methods are conceivable such as pallet and scattering. Therefore, the robot cannot operate unless specific content of the material supply is determined. The selection of the work content is selection of the specific content. For example, content is selected to a degree explained below with reference to Fig. 7.

Consequently, when the work object and the work content in the first work is selected, candidates of a work target of the second work can be displayed on the editing screen. The candidates of the work target may be work objects or may be work contents or may be subprograms in which work objects and work contents are specified. Since the information concerning the first work is used, it is possible to appropriately limit candidates of the work target of the second work and present the candidates to the user. For the user, it is possible to easily teach a robot operation.

Specifically, the processing device according to this embodiment may further include a storing section 110 that classifies, when the work includes first work to N-th (N is an integer equal to or larger than 2) work to be executed in time series, each subprogram of a plurality of subprograms into any one kind of work of the first work to the N-th work and stores the subprogram. When the subprogram of i-th (i is an integer satisfying 1≤i≤N-1) work among the first work to the N-th work is selected as an execution subprogram, which is the subprogram serving as an execution target, from the plurality of subprograms, the processing section 120 causes the processing device to display the editing screen on which candidates of the execution subprogram included in i+1-th work are displayed.

The first work to the N-th work may respectively correspond to work categories as explained above. That is, the first work to the N-th work can be replaced with first to N-th work categories. The first to N-th work categories may be four categories of material supply, positioning, processing, and material removal as shown in Fig. 5B. However, the work categories are not limited to these four categories. Modifications for, for example, deleting a part of the work categories and adding other work categories are possible. "The first work to the N-th work (the first to N-th work categories) executed in time series" indicates that, in a typical work procedure, execution order for each work category is decided to, for example, after executing work belonging to a given work category, execute work belonging to the next work category. For example, since positioning work for a given workpiece cannot be executed unless the workpiece is supplied from a material supply area to a work area of the robot, order of the material supply → the positioning can be set. Since work for the given workpiece cannot be executed before the positioning of the workpiece, order of the positioning → the processing can be set.

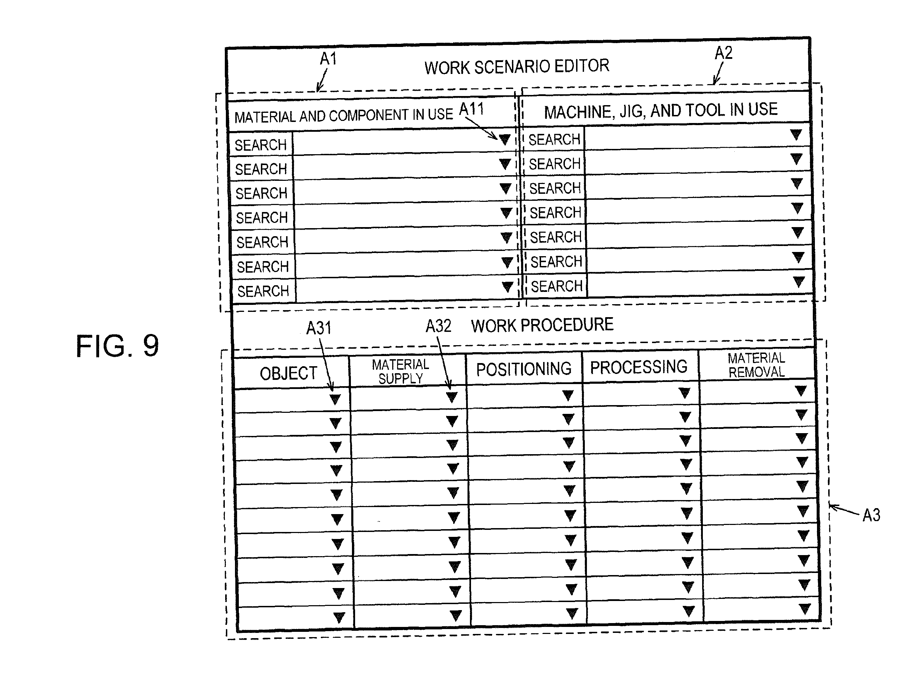

A work scenario may be created by using the editing screen displayed by the processing section 120. The work scenario is a scenario (a program) for causing the robot to execute work. The work scenario is configured by connecting a plurality of subprograms. The editing screen for the work scenario is an interface screen presented to the user when the user is caused to select subprograms that configure the work scenario. Details of the editing screen are explained below. For example, screens shown in Figs. 9 to 11, Fig. 17, and the like may be used. Note that, in this embodiment, among the subprograms stored in the storing section 110, a subprogram selected by the user and included in the work scenario is also referred to as execution subprogram.

Consequently, the subprograms are classified into the work categories and, when a given subprogram is selected, the subprograms to be selected as candidates next are limited on the basis of the work categories and presented on the editing screen. Therefore, it is possible to facilitate generation of the work scenario by the user. Specifically, on the premise that the subprogram belonging to an i+1-th work category is executed after the subprogram belonging to an i-th category, the subprograms in first to i-1-th work categories and 1+2-th to N-th work categories can be excluded from candidates. Selection of the subprograms by the user is facilitated. Further, since the work categories are used, it is possible to suppress creation of a work scenario in inappropriate order. For example, if the method in this embodiment is used, it is possible to suppress (in a narrow sense, prevent) likelihood of creation of a work scenario for performing positioning of a workpiece before supply of the workpiece.

Note that the processing device in this embodiment may be a device different from a control device included in the robot (a robot system). In this case, the processing device performs generation of a work scenario. However, the processing device is not related to robot control conforming to the work scenario. The created work scenario is input to a robot control device different from the processing device. The robot control device performs the robot control conforming to the work scenario.

However, when the processing device includes, as shown in Fig. 1, the processing section 120 that causes the processing device to display the editing screen for editing work to be performed by the robot, the work includes the first work and the second work, and a work object or work content in the first work is selected on the editing screen, the method in this embodiment can be applied to a robot that is caused to display candidates of a work target of the second work on the editing screen. More specifically, the method can be applied to a robot including the storing section 110 and the processing section 120. In a configuration shown in Fig. 2, the robot according to this embodiment includes a control device 100 and a robot main body 300. The storing section 110 and the processing section 120 are included in, for example, the control device 100. The robot main body 300 includes an arm 310 and an end effector 319 provided at the distal end or the like of the arm 310. The end effector 319 may be a hand that grips a workpiece or may be a tool or the like attached to the arm 310.

In this case, the control device 100 displays an editing screen shown in Fig. 9 or the like on the display section 200 and receives input information input by the user using an operation section 500 or the like to perform generation of a work scenario. Further, the control device 100 performs control of the robot main body 300 on the basis of the generated work scenario.

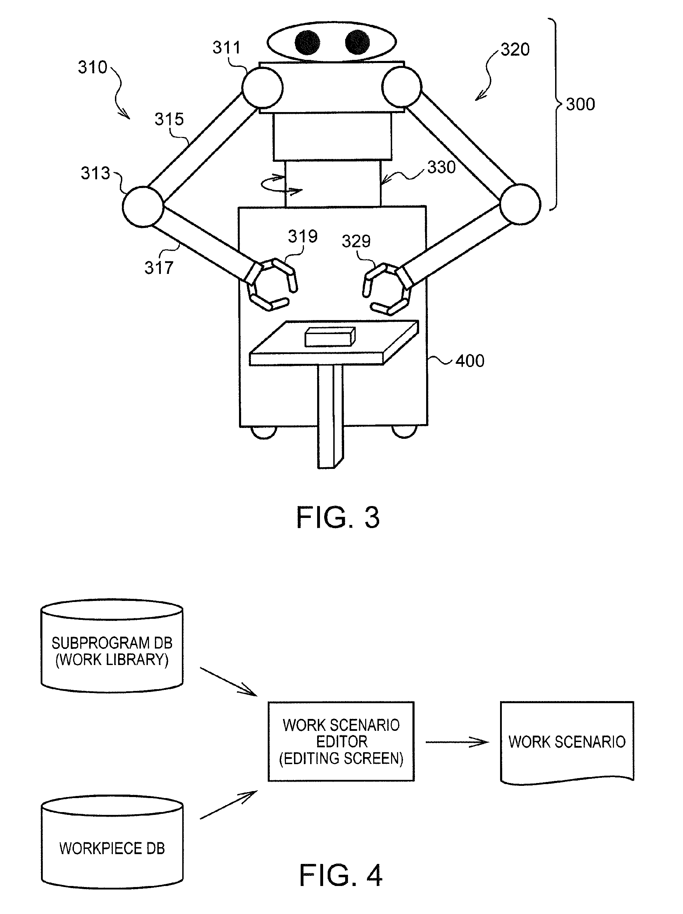

Note that a configuration example of the robot according to this embodiment is not limited to Fig. 2. For example as shown in Fig. 3, the robot may include the robot main body 300 and a base unit section 400. The robot main body 300 may be a double arm robot. The robot main body 300 includes a first arm 310 and a second arm 320 in addition to portions equivalent to the head and the body. In Fig. 3, the first arm 310 is configured from joints 311 and 313 and frames 315 and 317 provided between the joints. The configuration of the second arm 320 is the same. However, the configuration of the first arm 310 and the second arm 320 is not limited to this. Note that, in Fig. 3, an example of the double arm robot including two arms is shown. However, the robot in this embodiment may include three or more arms.

The base unit section 400 is provided under the robot main body 300 and supports the robot main body 300. In the example shown in Fig. 3, wheels or the like are provided in the base unit section 400. The entire robot is configured to be movable. However, it is also possible that the base unit section 400 does not include the wheels or the like and is fixed to a floor surface or the like. In the robot shown in Fig. 3, since the control device 100 is housed in the base unit section 400, the robot main body 300 and the control device 100 are configured as one unit.

Besides, when the method in this embodiment is applied to the robot, the configuration of the robot and the configuration of the robot main body 300 included in the robot can be variously modified.

The method in this embodiment can be applied to a robot system including a robot and a display section that displays an editing screen for editing work to be performed by the robot. The work includes first work and second work. When a work object or work content in the first work is selected on the editing screen, the display section displays candidates of a work target of the second work on the editing screen. The display section corresponds to, for example, the display section 200 shown in Fig. 2. The robot may correspond to the robot main body 300 shown in Fig. 2. The robot system may include a processing device that performs generation processing for the editing screen. The processing device may correspond to, for example, the processing device 100 shown in Fig. 2.

In this case, the user can teach operation to the robot of the robot system by performing operation (selection) according to the editing screen displayed on the display section of the robot system. The user can cause the robot to operate according to the instruction.

The method in this embodiment is explained in detail below. First, an example of a data structure of the subprograms is explained. Thereafter, a flow of processing in this embodiment is explained in detail with reference to editing screens displayed in steps.

### 2. Data structure

A conceptual diagram of the method in this embodiment is shown in Fig. 4. In this embodiment, information is read out from a subprogram DB (a work library) and a workpiece DB and displayed on an editing screen (a work scenario editor). A work scenario is created on the basis of an input of the user to the editing screen. Details of the editing screen and details of a creation method for the work scenario are explained below. First, the subprogram DB and the workpiece DB stored in the storing section 110 are explained.

Examples of data structures of subprograms stored in the subprogram DB are shown in Figs. 5A to 5C. The subprogram DB is a database that stores a plurality of subprograms including the data structures shown in Figs. 5A to 5C.

FIG. 5A is an example of a data structure of subprograms. The subprograms include operation content information, category information, an input context (input state information), an output context (output state information), and information representing workpieces selectable as work targets (selectable workpiece information).

The operation content information is information in which contents of the operations of the robot executed by invoking the subprograms are specifically described. Details of the operation content information are explained below.

The category information is information indicating to which category among the first to N-th work categories a subprogram belongs. The storing section 110 in this embodiment may classify each subprogram of a plurality of subprograms into any one work category of a material supply category, a positioning category, a processing category, and a material removal category executed in time series and store the subprogram. This can be rephrased as saying that the first work to the N-th work are material supply work for performing supply of a work object, positioning work for determining a work position, processing work for performing processing for the work object, and material removal work for performing removal of the work object after the processing. In that case, specific information input to an item of "category" in Fig. 5A is a value of any one of "material supply" , "positioning" , "processing", and "material removal" as shown in Fig. 5B.

First, by providing a category of "processing", it is possible to realize specific work for a workpiece. The specific work may be work for connecting two or more workpieces or may be work for bending or turning one workpiece or pouring some member into the workpiece.

However, basically, unlike a human, it is difficult for the robot to adjust a work position while checking a workpiece position in detail. A technique such as visual servo is known. However, it is still necessary to determine the position of a workpiece to a certain degree in order to perform the "processing". Therefore, in this embodiment, the category of the "positioning" is provided as a category prior to the category of the "processing".

Further, in the first place, in order to perform the positioning, a workpiece, which is a target of work, has to be present in a work area of the robot (e.g. , the front of the robot). In a factory line or the like, in general, a material supply area for a workpiece is provided, a work target workpiece is placed in the material supply area once, and a material supply operation for moving the workpiece from the material supply area to the work area is performed. Therefore, in this embodiment, the category of the "material supply" is provided as a category prior to the category of the "positioning". By providing the category of the "material supply", if the workpiece is supplied to the material supply area by some method, it is possible to leave the following work to the robot. It is possible to, for example, make work efficient.

If the workpiece for which the "processing" ends is kept in the work area for a long time, the following work is hindered and the workpiece after the processing cannot be shifted to the next process. Therefore, in this embodiment, the category of the "material removal" is provided as a category following the category of the "processing". The workpiece for which the processing ends is moved from the work area to a predetermined material removal area.

As explained above, the four categories of "material supply", "positioning", "processing", and "material removal" are provided. Consequently, it is possible to smoothly execute typical work of the robot. Naturally, as explained above, modifications for, for example, adding other categories and deleting several categories may be performed. For example, if highly accurate visual servo can be executed at high speed, the category of the "positioning" may be deleted.

The storing section 110 in this embodiment stores, as each subprogram of a plurality of subprograms, information in which input state information representing a state of the robot before the processing execution and output state information representing a state of the robot after the processing execution are associated with each other.

Specifically, as shown in Fig. 5A, each subprogram included in the subprogram DB is information including an input context (input state information) and an output context (output state information).

In this embodiment, as explained below, the contexts are included in subprograms to limit candidates of an execution subprogram to be displayed on the editing screen. Therefore, if the contexts are included in the subprograms, besides limitation by the work categories, subprograms to be candidates can be narrowed down. Therefore, it is possible to facilitate selection by the user and generate a more appropriate work scenario.

The contexts are, for example, information having the data structure shown in FIG. 5C. In the example shown in Fig. 5C, the contexts are information representing states of the left hand, the left arm, the right hand, the right arm, and the waist of the robot. If the robot includes the configuration shown in Fig. 3, the left arm corresponds to the second arm 320. The left hand corresponds to the end effector 329 provided in the second arm 320. Similarly, the right arm corresponds to the first arm 310. The right hand corresponds to the end effector 319 provided in the first arm 310. It is assumed that the waist is provided in a main body section to which the right arm and the left arm are connected, a joint are provided in the waist portion, and the robot can rotate around the waist. In the example of the robot shown in Fig. 3, if a joint rotatable in an arrow direction is provided in a portion 330 of the main body section, the portion 330 corresponds to the waist.

Values actually input to items of the contexts are values representing states of the items. In the example shown in Fig. 5C, concerning the right hand and the left hand, values correspond to states indicating what kind of a workpiece the hands grip and indicating that the hands grip nothing.

Concerning the right arm and the left arm, values represents the postures of the arms. The postures of the arms can be defined by values of joint angles included in the arms. For example, if an arm of the robot is a 6 degree-of-freedom arm having two degrees of freedom in each of the shoulder, the elbow, and the wrist like a human, one posture is represented by a set of values of six joint angles. In a broad sense, it is possible to use, as state information concerning the arms, a set of joint angles equivalent to the number of degrees of freedom of the arm. Alternatively, if it is unnecessary to strictly distinguish the posture of the arm, it is also possible that a plurality of postures are defined as typical postures of the arm and a posture closest to the present arm state among the plurality of the postures is used as state information representing the arm.

Concerning the waist, a rotation angle of the waist joint with respect to a reference position of the waist only has to be used as information representing a state of the waist.

Note that elements included in the contexts are not limited to Fig. 5C. Several elements may be deleted or other elements may be added. For example, if the robot is a single arm robot as shown in Fig. 2, one element is sufficient for each of a hand and an arm. Conversely, if the robot is a robot including three or more arms, elements concerning hands and the arms may be used by the number of the arms. If the robot is a robot including an image pickup section for inspection of a workpiece and for visual servo, information concerning the image pickup section may be included as elements of the contexts.

Various modifications are also possible for information input as values of the elements of the contexts. For example, as a value concerning the hand, as shown in Fig. 5C, information indicating whether the hand grips a workpiece and what the gripped workpiece is may be used. Finer information may be values including a position and a posture of a movable section (e.g., a finger structure) of the hand in a gripping state. When the image pickup section is added as an element of the contexts, information representing ON/OFF may be used as a value or an image pickup direction, result information of object recognition processing in a picked-up image, and the like may be used as values. Besides, various modifications are conceivable concerning the contexts (the input state information and the output state information).

As shown in Fig. 4, the storing section 110 in this embodiment stores information concerning a plurality of workpieces as workpiece information (a workpiece DB and work obj ect information) . As shown in Fig. 5A, the storing section 110 also stores, as each subprogram of the plurality of subprograms, information associated with selectable workpiece information (selectable workpiece object information) for specifying selectable workpieces, which are workpieces selectable as work targets, among the plurality of workpieces.

In the work DB, information concerning workpieces that could be work targets of the robot is stored as workpiece information. The workpiece information may be minimum information capable of identifying a workpiece. For example, information indicating only that a plurality of workpieces such as a workpiece A and a workpiece B could be work targets is stored. Information indicating what sizes and shapes the workpiece A and the workpiece B actually have does not have to be stored.

Alternatively, various kinds of information representing rough characteristics such as types, shapes, weights, and colors of the workpieces may be stored together with information for identifying the workpieces (e.g., names of the workpieces). Note that, in the method in this embodiment, when candidates of the execution subprograms are limited, any information included in the workpiece information may be used. Details are explained below.

The selectable workpiece information included in the subprograms shown in Fig. 5A is information representing workpieces selectable as work targets of the subprograms among the plurality of workpieces included in the workpiece DB.

For example, in a subprogram included in the "processing" category and for performing processing for connecting two workpieces through snap-fit, work for fitting and catching a projected portion of one workpiece in a recessed portion of the other workpiece is performed. That is, the workpieces serving as targets are limited to workpieces including the projected portion or the recessed portion at a stage of injection molding or workpieces attached with mechanisms such as snap buttons. Workpieces not including the projected portion or the recessed portion cannot be connected by the snap-fit. Therefore, in such a subprogram, information representing workpieces including the projected portion or the recessed portion is stored as the selectable workpiece information. Consequently, it is possible to suppress generation of an inappropriate work scenario in which, although a workpiece for which the snap-fit cannot be carried out is set as a target, the subprogram for the snap-fit is invoked.

Note that, in this embodiment, as explained below, the user is caused to select workpieces serving as work targets (work target workpieces) with reference to the workpiece DB. An executable subprogram is limited on the basis of the selected workpieces and the selectable workpiece information of the subprograms. Display processing for an editing screen is performed.

That is, in this embodiment, as explained above, candidates of the execution subprogram are extracted from the plurality of subprograms included in the subprogram DB and displayed on the editing screen using each of the work categories, the contexts, and the workpieces. Consequently, since an appropriate subprogram is set as a display target, selection by the user is facilitated. A highly appropriate work scenario is created. Specific extraction and display processing are explained below.

A specific example of the operation content information of the subprograms is explained. In Fig. 6, contents of work assumed in the work categories of "material supply (pick)", "positioning (set)", "processing (connect/process)", and "material removal (place)" are shown.

For example, in the category of the "material supply", "pallet" representing work for moving a workpiece palletized in a material supply area (arranged on a pallet in a specific positional relation) to a work area, "scattering" representing work for moving a workpiece placed without a positional relation particularly specified to the work area, and "bin" representing work for moving small components such as screws piled up in a heap to the work area are conceivable. Besides, the category of the "material supply" includes "work area" for moving an object generated by prior robot work and retracted to some position (e. g. , in a position at an end where the object does not hinder other work) of the work area to a position where work is easy (e.g., robot front) and "belt conveyor" for moving a workpiece supplied by a belt conveyor to the work area. The material supply work is sometimes unnecessary, for example, when a person carries a workpiece to an appropriate position and when a workpiece is arranged in an appropriate position of the work area at the end of the prior robot work. Therefore, in this embodiment, it is assumed that "none" indicating that nothing is performed is also included in the category work of the "material supply".

In the category of the "positioning", kinds of work such as "put" for arranging a workpiece in a predetermined position and "put into" for arranging a workpiece in a jig or the like having a positioning hole, "none" indicating that nothing is performed, and the like are conceivable.

In the category of the "processing", as work for connecting two or more components, "snap-fit", "screw", "ring ", "press", "insert", "solder", and "glue" are conceivable. When mainly one workpiece is a target, kinds of work such as "bend", "pour", "push", "turn", and "get" are conceivable. "None" maybe included in the work irrespective of the number of components.

In the category of the "material removal" , work opposite to the category of the "material supply" only has to be performed. Therefore, work such as "pallet" for palletizing a workpiece present in the work area in a pallet shape in the material removal area is conceivable. Besides, kinds of work such as "scattering", "bin", "work area", "belt conveyor", and "none" are included.

In this embodiment, the kinds of work shown in Fig. 6 may be represented by one subprogram. However, as explained above, even for one kind of work (e.g. , work of "screw"), a large number of ways for performing the work are conceivable. Therefore, it is assumed that a plurality of subprograms are prepared for one kind of work of "screw" . The operation content information of the subprograms in this embodiment includes more detailed information than the kinds of work shown in Fig. 6.

An example of operation content information of a subprogram is shown in Fig. 7. Fig. 7 is an example of a subprogram for executing "screw". Specifically, the operation content information includes identification information for uniquely identifying the subprogram, overview information indicating an overview of work, and condition information indicating conditions necessary for the work.

The identification information is a name of the work as shown in D1 of Fig. 7.

The overview information is information "fasten screws in four places on the rear surface in order from B1 to B4 at torque N using an electric driver" as shown in D2 in the example shown in Fig. 7. Information equivalent to (or more detailed than) the overview information is included in the condition information explained below. Therefore, the overview information is not so important for a system side (the processing section 120 of the processing device). However, the overview information is information significant in causing the user to easily understand work content executed by the subprogram.

The condition information is information indicating components in use (a workpiece, a tool, and a jig), work order, and the like as shown in D3 of Fig. 7. Screws and an electric driver in use, a manufacturer and a product number of a fastener, and the like are specified. At the same time, screwing order and the number of screws to be fastened and torque in fastening the screws are specified. Further, not only conditions concerning operation performed during work execution, but also constraints serving as premises for executing work may be stored. It is assumed that a gripping state of the electric driver, a positional relation of the fastener, a supply method for the screws, and the like are stored as the constraints.

Fig. 7 is an example of a subprogram for executing the "screw". As explained above, subprograms such as "screw 2" and "screw 3" for performing other kinds of screwing work are prepared. The same applies to the "snap-fit". As the subprogram for executing the "snap-fit", a plurality of subprograms such as "snap-fit 1" and "snap-fit 2" are prepared. That is, as shown in Fig. 6, the work categories include a plurality of kinds of specific work (in the example shown in Fig. 6, there are always a plurality of kinds of work but work may be one kind). The kinds of work are realized by one or a plurality of subprograms.

### 3. Screen flow

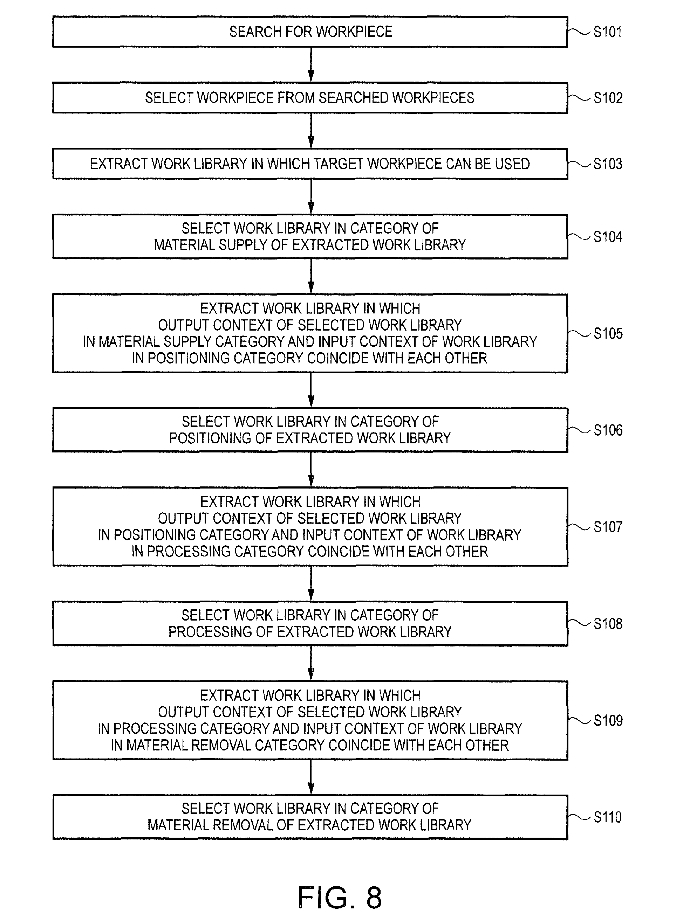

Details of processing performed in this embodiment are explained with reference to a flowchart of Fig. 8 and examples of editing screens in steps. In Fig. 9, an example of an editing screen used in this embodiment is shown. As shown in Fig. 9, the editing screen (a work scenario editor) includes an area A1 in which materials and components (workpieces) used in work are input, an area A2 in which machines, jigs, and tools used in the work are input, and an area A3 in which subprograms actually configuring a work scenario are selected and displayed. Note that the editing screen used in this embodiment is not limited to Fig. 9 and Figs. 10, 11, 17, and the like referred to below.

In the following explanation, first, an example in which one workpiece is a target in robot work is explained. Thereafter, an example in which a plurality of workpieces are used is explained.

### 3.1 Screen flow in the case of one workpiece

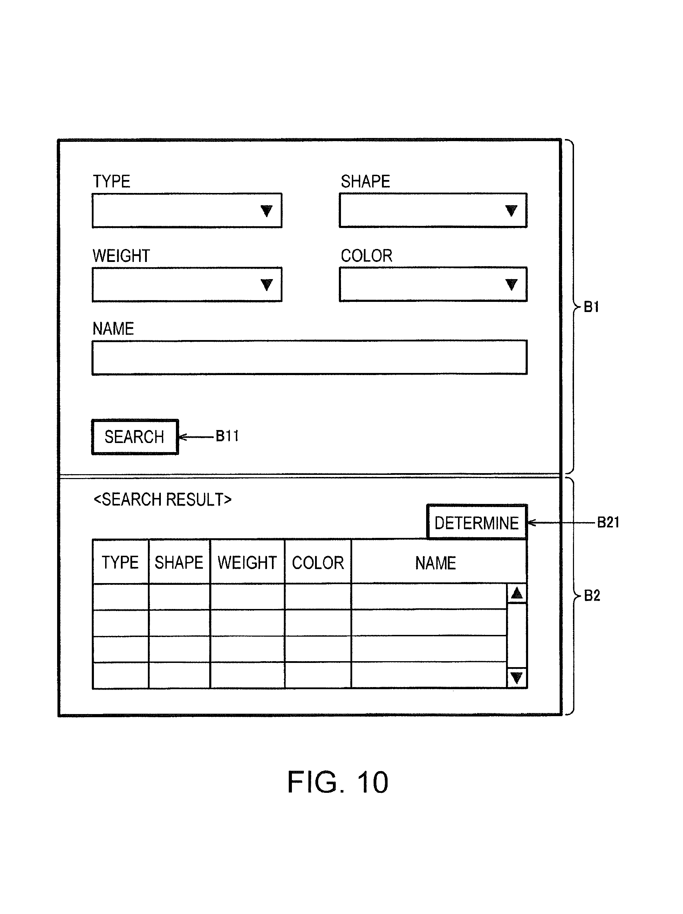

A flow of processing in this embodiment is explained with reference to a flowchart of Fig. 8. When the processing in this embodiment is started, first, in order to determine a workpiece serving as a target of work, search processing for a workpiece is performed (S101). Specifically, processing for displaying a search screen shown in Fig. 10 may be performed by detecting pressing of a search button indicated by A11 in the area A1 of the editing screen shown in Fig. 9. On the search screen shown in Fig. 10, a type, a shape, a weight, a color, and a name of a workpiece can be input using an area B1. The processing section 120 of the processing device performs processing for searching for, on the basis of a user input performed using the area B1, a workpiece coinciding with the type, the shape, the weight, the color, and the name input by the user in data stored in the workpiece DB of the storing section 110 and displaying a search result in an area B2. Naturally, it is unnecessary to input all of the type, the shape, the weight, the color, and the name. Some of the items do not have to be input. For example, when the weight is not input, all workpieces are selected as the target concerning the weight. It is also possible not to input all the items according to specifications. In that case, all the workpieces stored in the workpiece DB are displayed as the search result.

The search result is displayed as a list in the area B2. In this case, processing for, for example, sorting the items according to a specific item may be performed. The user selects a workpiece serving as a target of work from the workpieces displayed as a list and presses a determination button indicated by B21. When detecting the pressing of the determination button, the processing section 120 performs processing for specifying the workpiece in the selected state as a workpiece serving as a work target and displaying the result in the area A1 in Fig. 9 (S102). Work for setting one workpiece as a target is explained. Therefore, the processing in S101 and S102 only has to be performed once. When a plurality of workpieces are set as work targets as explained below, the search processing for a workpiece is repeated a plurality of times. A machine, a jig, and a tool in use are not particularly explained. However, search processing only has to be performed for the machine, the jig, and the tool in the same manner as the search processing for a workpiece.

When the workpiece serving as the work target (a work target workpiece) is selected, a subprogram is determined on the basis of information concerning the work target workpiece. Specifically, when the work target workpiece, which is the workpiece serving as the target, is determined, the processing section 120 performs, on the basis of selectable workpiece information, processing for displaying, on the editing screen, as candidates of an execution subprogram, among a plurality of subprograms, subprograms in which it is determined that the work target workpiece is a selectable work.

More specifically, first, the processing section 120 determines a workpiece serving as a work target first out of workpieces selected in S102. Since the example of one work target workpiece is explained, this processing may be skipped. In the case of a plurality of work target workpieces, for example, when an arrow button A31 is pressed in the area A3, the selected workpieces may be displayed as a list using the area A1 to urge the user to select one of the workpieces.

Subsequently, an execution subprogram belonging to a first work category among the work categories is determined. Specifically, the processing section 120 extracts subprograms capable of selecting the determined work target workpiece as a work target among the plurality of subprograms stored in the subprogram DB (S103). This processing can be realized by extracting, referring to the selectable workpiece information shown in Fig. 5A, among the subprograms, subprograms in which the work target workpiece is included in selectable workpieces. Further, the processing section 120 extracts, among the extracted subprograms, subprograms, work categories of which belong to the first category (the category of the "material supply").

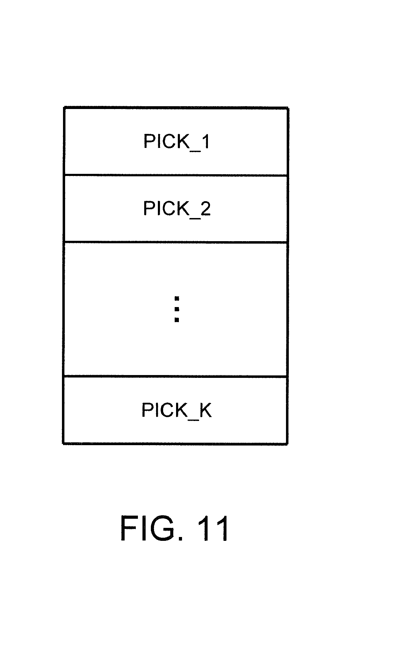

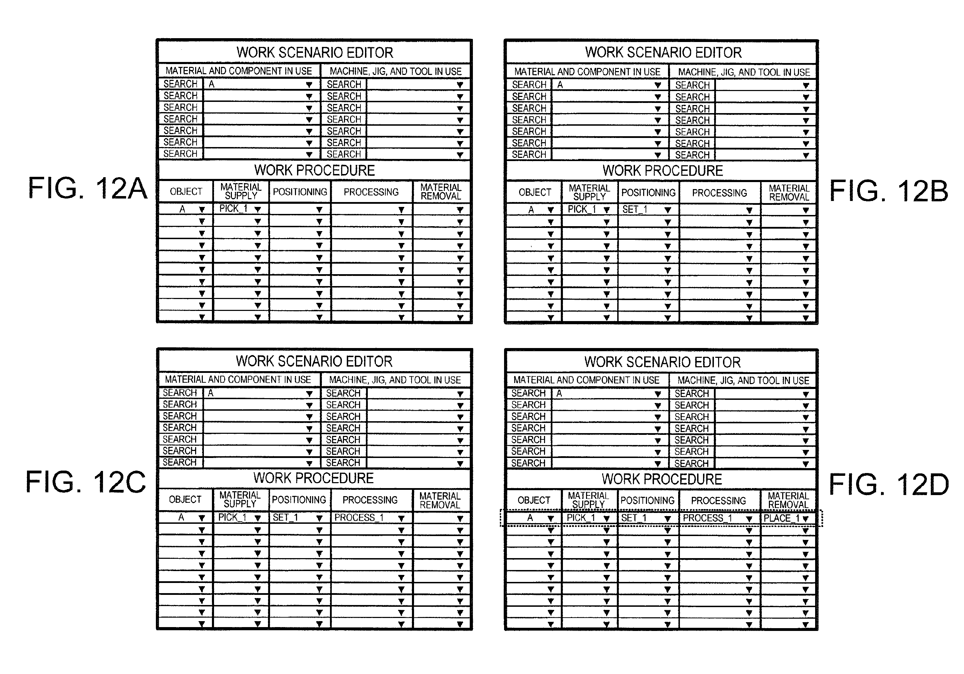

The processing section 120 performs processing for displaying an extraction result on the editing screen. For example, an extraction result screen only has to be displayed at timing when the work target workpiece is determined or timing when an arrow button for a material supply category indicated by A32 is pressed. The extraction result screen is, for example, a screen for displaying, as a list, the extracted subprograms as shown in Fig. 11. However, various modifications are possible for the display timing of the extraction result screen, contents to be displayed, and the like. The extraction result screen shown in Fig. 11 may be pop-up displayed to be superimposed on the screen shown in Fig. 9 (or as a screen separate from the screen shown in Fig. 9) or may be displayed as a select box when the button A32 is pressed. Detailed information such as specific processing content may be concurrently displayed rather than displaying only names of the subprograms. The processing section 120 receives selection by the user performed using the extraction result screen or the like, determines an execution subprogram in the category of the "material supply", and displays the execution subprogram in the area A3 as shown in Fig. 12A (S104).

Consequently, not all of the subprograms are selection targets by the user. It is possible to limit the selection targets to subprograms capable of selecting a work target workpiece. Therefore, selection by the user is easy. It is possible to suppress generation of an inappropriate work scenario for invoking a given subprogram concerning a workpiece that cannot be set as a target in the given subprogram.

Subsequently, when a subprogram in an i-th work category is selected from the plurality of subprograms as an execution subprogram, the processing section 120 performs processing for displaying, on the editing screen, as candidates of the execution subprogram, among the plurality of subprograms, subprograms that are classified in an i+1-th work category and in which input state information matches output state information of the subprogram in the i-th work category selected as the execution subprogram.

Specifically, since the subprogram in the category of the "material supply" is selected in S104, the processing section 120 determines an execution subprogram in the next category (the category of the "positioning") of the category of the "material supply". More specifically, the processing section 120 extracts subprograms, work categories of which belong to the category of the "positioning", in the extraction result in S103.

In this embodiment, the processing section 120 performs not only the extraction by the work category but also extraction using the input state information (the input context) and the output state information (the output context). In the work scenario generated in this embodiment, it is assumed that the execution subprogram in the i-th work category and the execution subprogram in the i+1-th work category are continuously invoked. Therefore, it is desirable that a state of the robot at the end of execution of the execution subprogram in the i-th work category and a state of the robot before execution of the execution subprogram in the i+1-th work category are close to (in a narrow sense, coincide) each other. Conversely, when the states are different, the two execution subprograms cannot be continuously invoked. In order to realize appropriate robot control, it is necessary to prepare another program for bridging two subprograms.

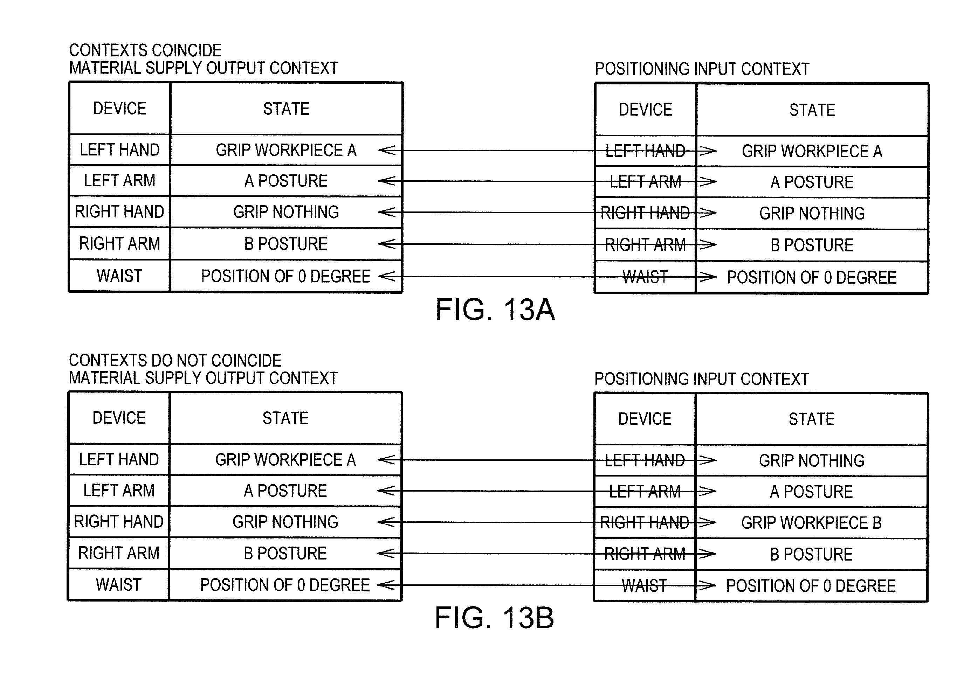

Therefore, in this embodiment, the processing section 120 performs comparison processing of an output context of the execution subprogram in the i-th work category and an input context of the execution subprogram in the i+1-th work category to guarantee that the two states are close to each other. Examples of the comparison processing of the contexts are shown in Figs. 13A and 13B. As shown in Fig. 13A, the processing section 120 compares elements configuring the contexts. When all of the elements match, the processing section 120 determines that the output context and the input context match. On the other hand, when there are different elements among the elements configuring the contexts as shown in items of "left hand" and "right hand" in Fig. 13B, the processing section 120 determines that the output context and the input context do not match.

However, "the contexts match" does not need to be perfect matching. For example, when the contexts are configured from a plurality of items, it may be determined that the contexts match if the items equal to or more than a predetermined threshold match even if the other items do not match (partial matching). In comparison processing of the items, it is also unnecessary to determine that the items match only when values of the items are the same. Various modifications are possible; for example, it is determined that the items match when the values are within a given range. For example, concerning a value of "waist" in Figs. 13A and the like, a position of 0 degree and a position of 1 degree are strictly different values. However, since 0 degree and 1 degree are extremely close to each other, it is possible to determine that items of "waist" match.

The processing section 120 performs the above processing and further applies, in selection of an execution subprogram in the category of the "positioning", extraction processing by the work category and the contexts to the extraction result in S103 (S105). A result of the extraction processing is displayed as an extraction result screen. Display processing for the extraction result screen is the same as the display processing in the case of the category of the "material supply". The processing section 120 receives the user input by the displayed extraction result screen and determines the execution subprogram in the category of the "positioning" (S106). An example of an editing screen after the processing in S106 is Fig. 12B.

Similarly, the processing section 120 extracts, as candidates of an execution subprogram in the category of the "processing", subprograms that are included in the extraction results in S103 (work target workpieces of which are included in selectable workpieces), work categories of which belongs to the "processing" category following the "positioning", and in which an output context and an input context of the execution subprogram of the "positioning" category match (S107). The processing section 120 selects an execution subprogram using an extraction result screen or the like (S108). An example of an editing screen after the processing in S108 is Fig. 12C.

Further, the processing section 120 extracts, as candidates of an execution subprogram in the category of the "material removal", subprograms that are included in the extraction results in S103 (work target workpieces of which are included in selectable workpieces), work categories of which belongs to the "material removal" category following the "processing", and in which an output context and an input context of the execution subprogram of the "processing" category match (S109). The processing section 120 selects an execution subprogram using an extraction result screen or the like (S110). An example of an editing screen after the processing in S110 is Fig. 12D.

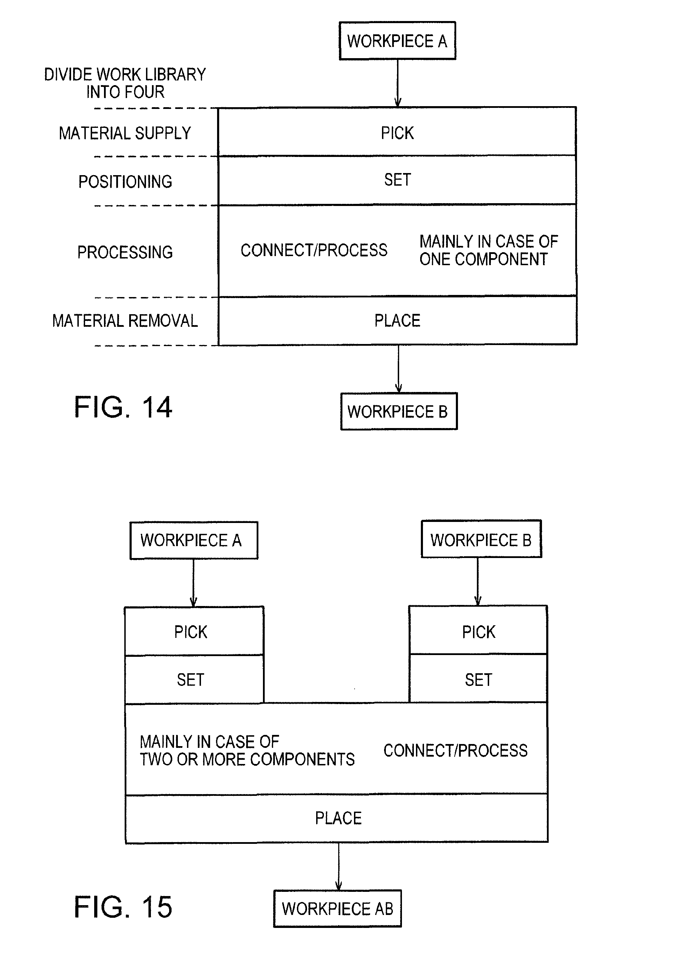

The robot work assumed in the flowchart of Fig. 8 is robot work for performing the kinds of processing of the "material supply", the "positioning", the "processing", and the "material removal" targeting one workpiece as shown in Fig. 14 and acquiring one workpiece as a work result. If the method in this embodiment explained above is used, simply by operating the screen shown in Fig. 9 and selecting desired items from the candidates presented using the screens shown in Figs. 10, 11, and the like, the user can easily create a work scenario for realizing the robot work shown in Fig. 14.

The processing explained above with reference to the flowchart of Fig. 8 is executed and one execution subprogram is selected from each work category of the first to N-th work categories. When N execution subprograms are selected, the processing section 120 performs processing for displaying, as an editing screen, a screen for displaying, as a list, the N execution subprograms to be executed in time series.

Specifically, the user simply selects candidates. As a result, the editing screen shown in FIG. 12D is displayed. On the screen shown in Fig. 12D, a workpiece A, which is a work target workpiece, and execution subprograms pick_1, set_1, process_1, and place_1 in the work categories are displayed (in a broad sense, displayed as a list) in a row in a portion surrounded by a dotted line. That is, by displaying the screen shown in Fig. 12D as a result of the selection operation of the user, it is possible to present to the user, in a form easy for the user to understand, an overview of a work program indicating what kinds of subprograms are read out in which order for which workpiece.

Note that, in counting of "N", the subprogram "none" explained above with reference to Fig. 6 is also treated as one. That is, "N" means that, even when work in any one of the work categories is skipped, an execution subprogram for the skip is selected. In an implementation for not selecting a do-nothing operation of "none" in skipping work, execution subprograms to be displayed as a list are fewer than the number of work categories. Specifically, execution subprograms are displayed as a list by the number of work categories set as execution targets among the first to N-th work categories.

### 3.2 Screen flow in the case of two or more workpieces

As work of the robot, work for brining a workpiece A and a workpiece B and connecting the workpieces A and B to produce a workpiece AB is conceivable. Such work is represented by a schematic diagram shown in Fig. 15. Specifically, the workpiece A is supplied and positioned. At that stage, since the workpiece B is absent, processing (connection) cannot be performed. Since the workpiece AB is not produced, material removal cannot be performed either. Therefore, the processing for the workpiece A and the material removal are skipped. The skip is realized by, for example, processing for selecting an execution subprogram, work content of which is a do-nothing operation. Thereafter, if the workpiece B is supplied and positioned, work for assembling together the workpiece A and the workpiece B can be performed. Therefore, the processing and the material removal only have to be performed at this stage.

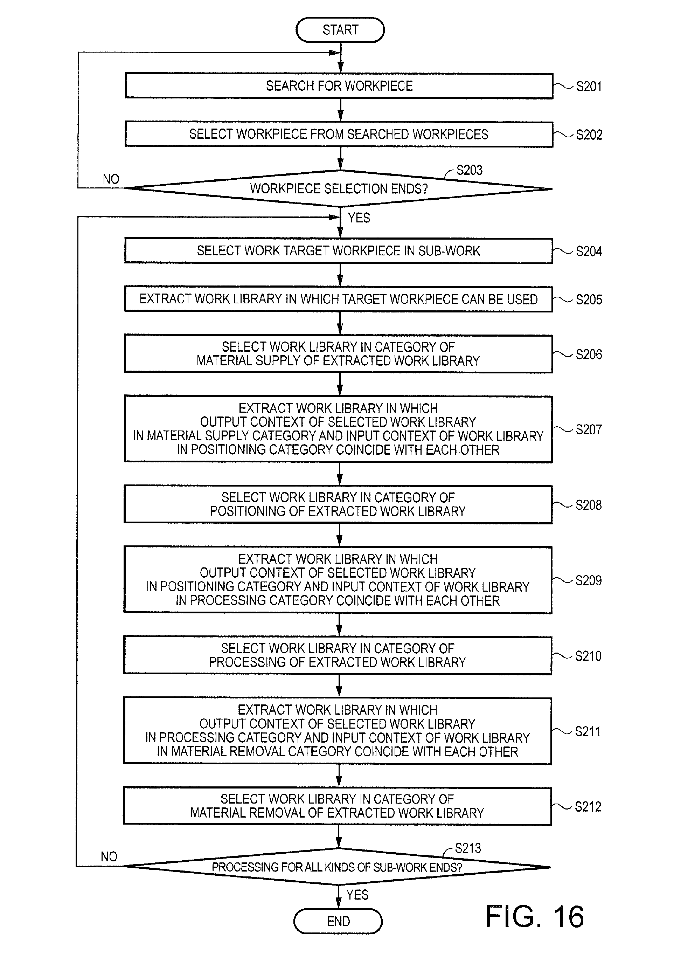

A flow of specific processing is shown in Fig. 16. Specifically, in the following explanation, the work shown in Fig. 15 is assumed. However, a flowchart of Fig. 16 is applicable to other situations such as a situation in which three or more workpieces are used.

When the processing is started, first, the processing section 120 performs search and selection processing for a workpiece as in S101 and S102 in Fig. 8 (S201 and S202). However, since it is assumed that there are a plurality of workpieces serving as work targets, in S203, the processing section 120 determines whether workpiece selection ends. When the workpiece selection does not end, the processing section 120 returns to S201 and repeats the search and the selection. Specifically, the processing section 120 selects the workpiece A in the first processing in S201 and S202 and selects the workpiece B in the second processing in S201 and S202.

When the selection of workpieces ends, the processing section 120 determines a work target workpiece in sub-work out of a selected plurality of workpieces (S204). The sub-work represents a work unit obtained when robot work is divided into finer units. Alternatively, the sub-work is also referred to as a work block because the sub-work is a block configured as a set of the four work categories of material supply, positioning, processing, and material removal. In the following explanation, the term "sub-work" is used. However, "the robot work is divided into first sub-work to M-th sub-work (configured from the first sub-work to the M-th sub-work) " is synonymous with "the robot work is configured as a set of a first work block to an M-th work block".

Specifically, the sub-work (the work block) may be determined on the basis of a work target workpiece. In that case, the processing section 120 divides, on the basis of a workpiece serving as a target of work by the robot, work into the first sub-work to the M-th sub-work set in workpiece units. The processing section 120 performs, concerning each kind of sub-work of the first sub-work to the M-th sub-work, the display processing for the editing screen used for the selection of an execution subprogram concerning each work category of the first to N-th work categories. In other words, the processing section 120 divides, on the basis of a work objects of the robot, the work into the first work block to the M-th work block set in work object units. The processing section 120 causes, concerning each work block of the first work block to the M-th work block, the processing device to display the editing screen used for the selection of an execution subprogram concerning each kind of work of the first work to the N-th work.

For example, when the work for connecting the workpiece A and the workpiece B shown in Fig. 15 is performed by a double arm robot, it is not impossible to simultaneously execute work for supplying and positioning the workpiece A with one arm and work for supplying and positioning the workpiece B with the other arm. However, compared with when the workpiece A is supplied and positioned and thereafter the workpiece B is supplied and positioned, restrictions on the arms used for work increase and robot control is difficult. Therefore, in this embodiment, processing is performed targeting one workpiece and, after the end of the processing for the workpiece, processing is performed targeting the other workpiece. That is, when the entire robot work is divided into several kinds of sub-work, if one workpiece set as a target is determined, it is possible to set, as one kind of sub-work, work configured from a series of work for the workpiece. Consequently, it is possible to easily execute both of creation of a work scenario and robot control conforming to the created work scenario.

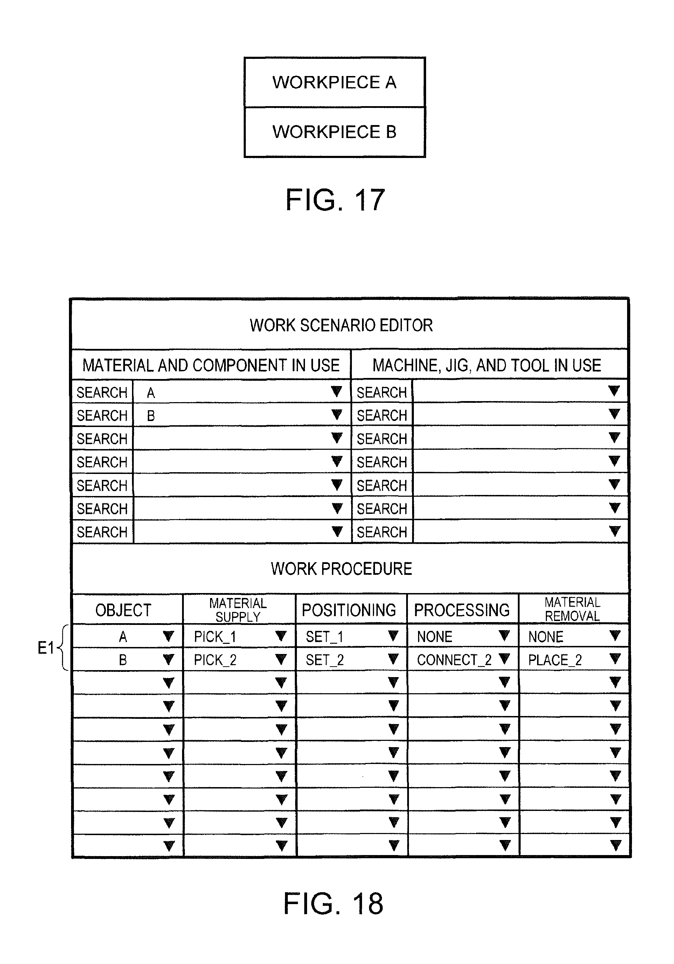

That is, in S204, the processing section 120 only has to perform, on the basis of the plurality of workpieces selected in the loop of S201 to S202, processing for selecting one workpiece to be set as a work target next. In the work example shown in Fig. 15, when S204 is executed first, the workpiece A is selected. This processing can be realized by, for example, performing, in response to pressing of the arrow of A31 shown in Fig. 9, control for displaying a workpiece selection screen shown in Fig. 17 and receiving selection operation of the user based on the workpiece selection screen.

Workpieces displayed in Fig. 17 are, in a narrow sense, the plurality of workpieces selected in the loop of S201 to S202. In the work shown in Fig. 15, the workpiece A and the workpiece B only have to be displayed as shown in Fig. 17. However, even if only the workpiece A and the workpiece B are selected in S201 to S202, it is likely that work for the workpiece AB produced by assembling together the workpiece A and the workpiece B is performed. That is, on the workpiece selection screen, not only the workpieces selected in S201 to S202 but also all workpieces, which could be work targets, obtained on the basis of the workpieces may be displayed.

Processing in S205 to S208 for selecting execution subprograms in the categories of the "material supply" and the "positioning" after the selection of the work target workpiece in the sub-work is the same as S103 to S106 in Fig. 8. Processing in S209 to S212 for selecting execution subprograms in the categories of the "processing" and the "material removal" is the same as S107 to S110 in Fig. 8 in terms of the flowchart. However, the work in the categories of the "processing" and the "material removal" is once skipped for the workpiece A as explained above. Therefore, the user performs operation for selecting subprograms, work contents of which are "none". The processing section 120 displays an editing screen on which the "processing" and the "material removal" are "none" as shown in a portion of E1 in Fig. 18.

After the processing in S212, the processing section 120 determines whether processing for all kinds of sub-work ends (S213). At a point in time when the processing concerning the sub-work corresponding to the workpiece A ends, sub-work for connecting the workpiece B is not performed yet. Therefore, the processing section 120 determines No in S213 and returns to S204.

Thereafter, in S204, the processing section 120 performs processing for selecting the workpiece B. In S205 to S208, the processing section 120 supplies and positions the workpiece B. Thereafter, in S209 to S210, the processing section 120 performs selection processing for an execution subprogram for connecting the workpiece A and the workpiece B. In S211 to S212, the processing section 120 performs selection processing for an execution subprogram for removing the workpiece AB which is connected workpiece. After the selection of the execution subprogram for removing the workpiece AB, the processing section 120 determines Yes in S213 and ends the processing.

By executing the processing explained above with reference to the flowchart of Fig. 16, when the work by the robot is configured from the first sub-work to the M-th (M is an integer equal to or larger than 2) sub-work, for each kind of sub-work of the first sub-work to the M-th sub-work, one execution subprogram is selected from each work category of the first to N-th work categories, whereby N pieces of execution subprograms are selected, and MxN pieces of execution subprograms are selected for the work by the robot, the processing section 120 performs processing for displaying, as an editing screen, a screen for displaying, as a list, MxN pieces of the execution subprograms to be executed in time series. In other words, when, for each work block of the first work block to the M-th work block, one execution subprogram is selected from each kind of work of the first work to the N-th work, whereby N pieces of the execution subprograms are selected and MxN pieces of the execution subprograms are selected for the work by the robot, the processing section 120 causes the processing device to display, as the editing screen, the screen for displaying, as a list, MxN pieces of the execution subprograms to be executed in time series.

Specifically, the user simply selects candidates. As a result, an editing screen shown in Fig. 18 is displayed. On the screen shown in Fig. 18, one row in the portion indicated by E1 corresponds to one kind of sub-work. In the one row, a work target workpiece in the sub-work and execution subprograms in work categories for the work target workpiece are displayed. Kinds of sub-work are also displayed in time series such that the top row represents the first sub-work and the second row represents the next sub-work. In an example shown in Fig. 18, A, pick_1, set_1, none, and none are displayed in the first row and B, pick_2, set_2, connect_2, and place_2 are displayed (in a broad sense, displayed as a list) in the second row. That is, by displaying the screen shown in Fig. 18 as a result of the selection operation of the user, it is possible to present to the user, in a form easy for the user to understand, an overview of a work program indicating what kind of sub-work the robot work executes in which order and what kinds of subprograms the kinds of sub-work are read out in which order for which workpieces.

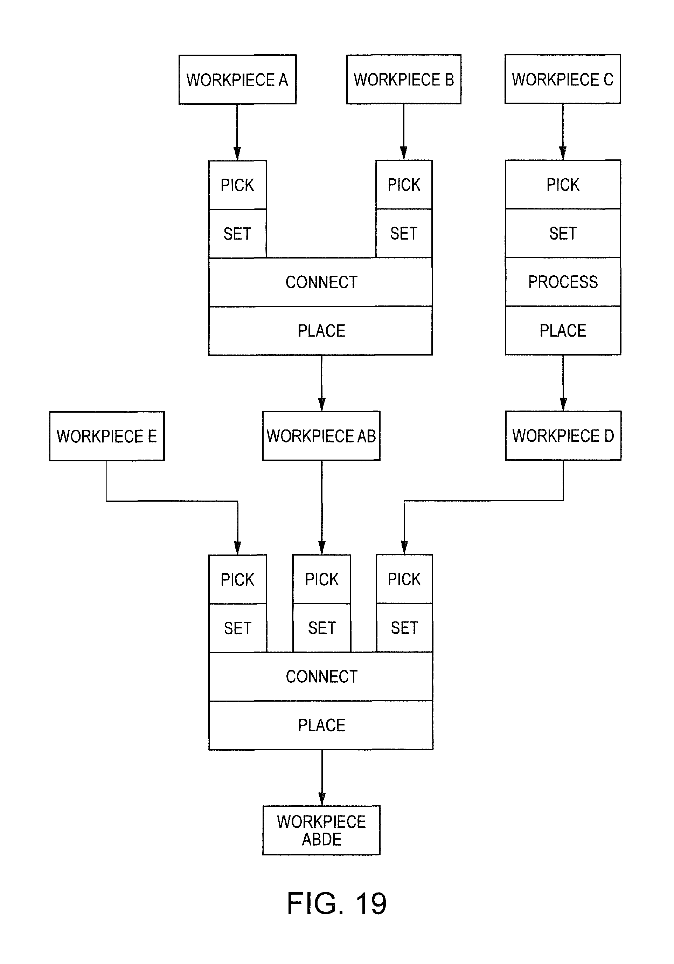

Note that the robot work may be more complicated robot work. For example, in robot work shown in Fig. 19, work for connecting the workpiece A and the workpiece B to produce the workpiece AB, work for applying processing (e.g., bending) to a workpiece C to produce a workpiece D, and work for connecting a workpiece E, the workpiece AB, and the workpiece D to produce a workpiece ABDE are performed.

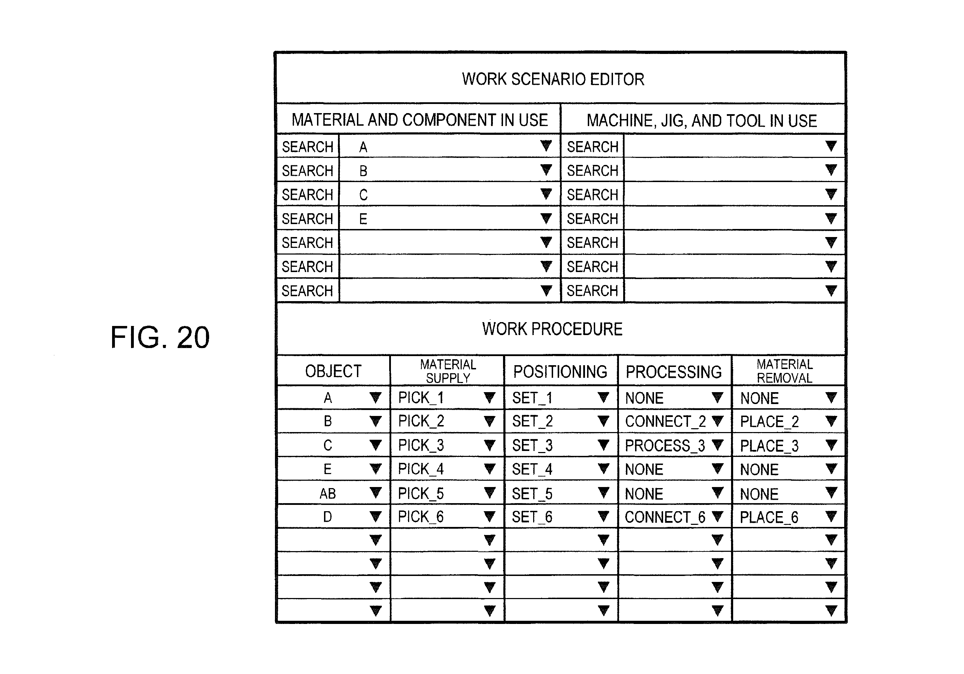

An editing screen representing a work scenario creation result in this case is as shown in Fig. 20. First and second rows correspond to the work for producing the workpiece AB from the workpiece A and the workpiece B as in Fig. 18. A third row corresponds to the work for producing the workpiece D from the workpiece C. In a fourth row, processing up to positioning of the workpiece E is performed. In a fifth row, processing up to positioning of the workpiece AB is performed. The categories of the "processing" and the "material removal" in the fourth and fifth rows are "none". In a sixth row, supply and positioning of the workpiece D, connecting work for the workpiece E, the workpiece AB, and the workpiece D, and removal work for the workpiece ABDE to be produced are performed.

Consequently, even when a work scenario for executing the complicated work shown in Fig. 19 is generated, the user can set sub-work by sequentially selecting one work target workpiece out of candidates of a work target workpiece determined on the basis of a selected plurality of workpieces. It is possible to select an execution subprogram for realizing the sub-work simply by selecting subprograms out of candidates displayed for each kind of sub-work. In the work shown in Fig. 19, workpieces to be input are the four workpieces A, B, C, and E. However, it is possible to easily set six kinds of appropriate sub-work also taking into account the presence of the workpiece AB produced from the workpieces A and B and the workpiece D produced from the workpiece C. As in the simple work explained above, subprograms to be executed in the kinds of sub-work can be easily selected. Further, as in the example shown in Fig. 18, by displaying the screen shown in Fig. 20, it is possible to present a created work scenario to the user in a form easy for the user to understand.

Note that a part or most of the processing of the processing device and the like in this embodiment may be realized by a computer program. In this case, a processor such as a CPU executes the computer program, whereby the processing device and the like in this embodiment are realized. Specifically, a computer program stored in a non-transitory information storage medium is read out. The processor such as the CPU executes the read-out computer program. The information storage medium (a computer readable medium) stores computer programs, data, and the like. A function of the information storage medium can be realized by an optical disk (a DVD, a CD, etc.), a HDD (hard disk drive), a memory (a card type memory, a ROM, etc.), or the like. The processor such as the CPU performs various kinds of processing in this embodiment on the basis of the program (the data) stored in the information storage medium. That is, in the information storage medium, computer programs for causing a computer (an apparatus including an operation section, a processing section, a storing section, and an output section) to function as the sections in this embodiment (computer programs for causing the computer to execute the processing of the sections) are stored.

Note that this embodiment is explained above in detail. However, those skilled in the art could easily understand that a large number of modifications not substantially departing from the new matters and the effects of the invention are possible. Therefore, all such modifications are deemed to be included in the scope of the invention. For example, terms described together with broader or synonymous different terms at least once in the specification or the drawings can be replaced with the different terms in any place in the specification or the drawings. The configurations and the operations of the processing device and the like are not limited to those explained in this embodiment. Various modified implementations of the configurations and the operations are possible.

## Claims

1. A processing device comprising a processing section (120) configured to cause the processing device to display an editing screen for editing work to be performed by a robot, wherein
the work includes first work and second work, and
when a work object or work content in the first work is selected on the editing screen, the processing section (120) causes the processing device to display candidates of a work target of the second work on the editing screen.

2. The processing device according to claim 1, further comprising a storing section (110) configured to classify, when the work includes first work to N-th (N is an integer equal to or larger than 2) work to be executed in time series, each subprogram of a plurality of subprograms into any one kind of work of the first work to the N-th work and store the subprogram, wherein
when the subprogram of i-th (i is an integer satisfying 1<i<N-1) work among the first work to the N-th work is selected as an execution subprogram, which is the subprogram serving as an execution target, from the plurality of subprograms, the processing section (120) causes the processing device to display the editing screen on which candidates of the execution subprogram included in i+1-th work are displayed.

3. The processing device according to claim 2, wherein the storing section (110) stores, as each subprogram of the plurality of subprograms, information in which input state information representing a state of the robot before processing execution and output state information representing the state of the robot after the processing execution are associated with each other.

4. The processing device according to claim 3, wherein, when the subprogram of the i-th work is selected from the plurality of subprograms as the execution subprogram, the processing section (120) causes the processing device to display, on the editing screen, as a candidate of the execution subprogram, among the plurality of subprograms, the subprogram classified into the i+1-th work, the input state information of the subprogram matching the output state information of the subprogram in the i-th work category selected as the execution subprogram.

5. The processing device according to any one of claims 2 to 4, wherein the storing section (110) stores information concerning a plurality of work objects as work object information and stores, as each subprogram of the plurality of subprograms, information associated with selectable workpiece object information for specifying a selectable workpiece object, which is a work object selectable as a work target among the plurality of work objects.

6. The processing device according to claim 5, wherein, when the work object by the robot is determined, the processing section (120) causes, on the basis of the selectable workpiece object information, among the plurality of subprograms, the processing device to display, as a candidate of the execution subprogram, the subprogram in which it is determined that the determined work object is the selectable workpiece object on the editing screen.

7. The processing device according to any one of claims 2 to 6, wherein, when a singularity of the execution subprogram is selected from the first work to the N-th work, whereby N pieces of the execution subprograms are selected, the processing section (120) causes the processing device to display, as the editing screen, a screen for displaying, as a list, the N execution programs to be executed in time series.

8. The processing device according to claim 7, wherein, when the work by the robot is configured from a first work block to an M-th (M is an integer equal to or larger than 2) work block, one block of which is a set of the first work to the N-th work, when a singularity of the execution subprogram is selected from each kind of work of the first work to the N-th work, whereby N pieces of the execution subprograms are selected with respect to each work block of the first work block to the M-th work block and MxN pieces of the execution subprograms are selected with respect to the work by the robot, the processing section (120) causes the processing device to display, as the editing screen, a screen for displaying, as a list, MxN pieces of the execution subprograms to be executed in time series.

9. The processing device according to claim 8, wherein the processing section (120) divides, on the basis of a work object of the robot, the work into the first work block to the M-th work block set in units of the work object and causes, concerning each work block of the first work block to the M-th work block, the processing device to display the editing screen used for selection of the execution subprogram concerning each kind of work of the first work to the N-th work.

10. The processing device according to any one of claims 2 to 9, wherein the first work to the N-th work are material supplying work for performing supply of the work object, positioning work for determining a work position, processing work for performing processing for the work object, and material removing work for performing removal of the work object after the processing.

11. The processing device according to any one of the preceding claims, wherein
the processing device is a robot,
the processing section (120) is configured to cause the robot to display an editing screen for editing work to be performed by the robot, and
when a work object or work content in the first work is selected on the editing screen, the processing section (120) causes the robot to display candidates of a work target of the second work on the editing screen.

12. A robot system comprising:
a robot, wherein the robot is optionally configured according to claim 11; and
a display section (200) configured to display an editing screen for editing work to be performed by the robot, wherein
the work includes first work and second work, and
the display section (200) displays candidates of a work target of the second work on the editing screen when a work object or work content in the first work is selected on the editing screen.

13. A processing method comprising:
displaying an editing screen for editing first work to be performed by a robot; and
displaying, when a work object or work content in the first work is selected on the editing screen, candidates of a work target of second work to be performed by the robot on the editing screen.

14. The processing method according to claim 13, further comprising the step of classifying, when the work includes first work to N-th (N is an integer equal to or larger than 2) work to be executed in time series, each subprogram of a plurality of subprograms into any one kind of work of the first work to the N-th work and store the subprogram,
wherein, when the subprogram of i-th (i is an integer satisfying 1≤i≤N-1) work among the first work to the N-th work is selected as an execution subprogram, which is the subprogram serving as an execution target, from the plurality of subprograms, the editing screen is displayed on which candidates of the execution subprogram included in i+1-th work are displayed.

15. The processing method according to claim 14, wherein, as each subprogram of the plurality of subprograms, information is stored in which input state information representing a state of the robot before processing execution and output state information representing the state of the robot after the processing execution are associated with each other.
